# EUROPÄISCHE PATENTSCHRIFT

(11) **EP 0 518 176 B1**
(45) Veröffentlichungstag und Bekanntmachung des Hinweises auf die Patenterteilung: **23.10.1996**
(21) Anmeldenummer: 92109253.2
(22) Anmeldetag: 02.06.1992
(51) Int. Cl.: B29C 61/06

(54) **Verfahren zur Herstellung eines gewebeverstärkten wärmerückstellbaren Gegenstandes**
Method for making a fabric reinforced, heat-recoverable article
Procédé de fabrication d'un objet thermorétractable renforcé par un tissu

(30) Priorität: 14.06.1991 DE 4119633
(43) Veröffentlichungstag der Anmeldung: 16.12.1992
(73) Patentinhaber: kabelmetal electro GmbH, D-30002 Hannover (DE)
(72) Erfinder: Grajewski, Franz, Dr. Ing., Stadthagen (DE)

(56) Entgegenhaltungen:
- EP-A- 0 270 132
- EP-A- 0 416 352
- WO-A-88/09263

## Beschreibung

Die Erfindung betrifft ein Verfahren zur Herstellung eines gewebeverstärkten wärmerückstellbaren Gegenstandes, bei dem ein oder mehrere Stränge aus Kunststoff in einer Polymermatrix eingebettet werden, die Polymermatrix vernetzt, auf eine Temperatur oberhalb des Kristallitschmelzpunktes der Polymermatrix erwärmt, bei dieser Temperatur gedehnt und in gedehntem Zustand abgekühlt wird.

Gewebeverstärkte Manschetten zum Umhüllen von Spleißstellen von Nachrichtenkabeln sind aus der EP-A2- 0 270 132 sowie der DE-A1 38 33 415 bekannt.

Bei der EP-A2- 0 270 132 wird ein Gewebe aus gereckten und daher schrumpfbaren Polymerfäden und quer dazu verlaufenden Glasfäden in einer Polymermatrix eingebettet. Beim Erwärmen schrumpfen die Polymerfäden und nehmen dabei die Polymermatrix mit. Eine mechanische Verstärkung ist nur in Richtung der Glasfäden gegeben.

Aus der DE-A1 38 33 415 ist es bekannt, ein Gewebe aus in einer Richtung verlaufenden Kunststoffäden, die eine Bewicklung aus nicht dehnbarem Material, wie z.B. Glasfasern, aufweisen, und quer dazu verlaufenden Glasfasern in einer Polymermatrix einzubetten. Um diesen Gegenstand schrumpfbar zu machen, ist es erforderlich, die Matrix zu vernetzen und den Gegenstand in Richtung der umwickelten Kunststoffäden zu recken. Beim Recken wird die Umwicklung gestreckt, d.h. aus dem im wesentlichen wendelförmigen Verlauf der Bewicklung wird ein gestreckter Verlauf der Bewicklungsfäden. In diesem Fall liegt eine mechanische Verstärkung in zwei Richtungen vor.

Aus der EP-A2-0 416 352 ist es bekannt, auf ein extrudiertes Rohr einen oder mehrere Stränge aus einem polymeren Werkstoff aufzuwickeln, die zweckmäßigerweise eine Bewicklung mit einem Faden aus einem nicht reckbaren Material wie z. B. Glasseide tragen. Auf das bewickelte Rohr wird ein weiteres Rohr extrudiert. Nach dem Vernetzen mindestens eines der Rohre wird das Gebilde auf die Kristallitschmelztemperatur des vernetzten Rohres erwärmt, bei dieser Temperatur aufgeweitet und im aufgeweiteten Zustand abgekühlt.

Der vorliegenden Erfindung liegt die Aufgabe zugrunde, ein Verfahren zur Herstellung eines verstärkten wärmerückstellbaren Gegenstandes anzugeben, bei welchem auf die aufwendige Bewicklung eines Stranges verzichtet werden kann, ohne daß die Reißfestigkeit des Gegenstandes verschlechtert wird.

Diese Aufgabe wird durch die im Kennzeichen des Anspruches aufgeführten Merkmale erreicht.

Es hat sich völlig überraschend gezeigt, daß an der Grenzfläche zwischen dem Faden aus thermoplastischem Kunststoff und der vernetzten Polymermatrix das Weiterreißen unterbunden wird. Eine eindeutige Erklärung für diese Erscheinung liegt nicht vor. Es wird vermutet, daß an der Grenzfläche Oberflächenspannungen vorhanden sind, die bremsend auf das Weiterreißen wirken und daß die Kraft in der Rißspitze wegen der im Vergleich zur Dicke der Fäden verringerten Schichtdicke der Matrix abnimmt. Dadurch, daß der Arbeitsgang Bewickeln entfällt, lassen sich die zum Einbetten verwendeten Gewebe wesentlich preisgünstiger herstellen.

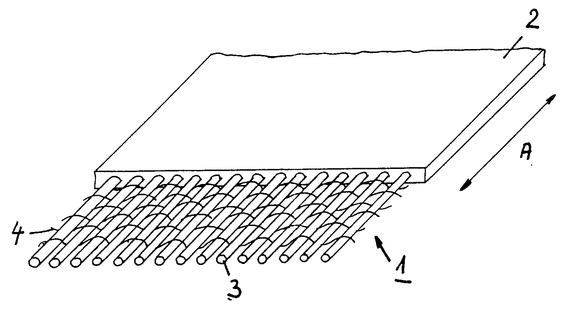

Die Erfindung soll anhand des in der Figur dargestellten Ausführungsbeispieles näher erläutert werden.

Die Figur zeigt in der Ansicht ein Gewebe 1, welches in einer Matrix 2 aus Kunststoff eingebettet ist. Das Gewebe 2 besteht aus einer Vielzahl von parallel zueinander verlaufenden Strängen bzw. Fäden 3 aus einem thermoplastischen Kunststoff und senkrecht dazu verlaufenden Fäden 4 aus einem im wesentlichen nicht reckbaren zugfesten Werkstoff, wie z.B. Baumwolle, Metall, Glas, Keramik. Ebenfalls einsetzbar sind Fäden aus Kunststoff, die eine wesentlich höhere Erweichungstemperatur haben als der Werkstoff, aus dem die Fäden 3 gefertigt sind. Beispiele für solche Werkstoffe sind Polyamid, Polyaramid, Polyester, ect..

Um einen wärmerückstellbaren Gegenstand herzustellen, wird zunächst das Gewebe 1 hergestellt. Dabei ist wesentlich, daß ein ausreichend großer Abstand zwischen den einzelnen Fäden 3 zueinander sowie zwischen den Fäden 4 zueinander verbleibt. Dies ist deshalb wichtig, damit beim Einbetten des Gewebes 1 in das Material der Kunststoffmatrix 2 Kunststoffmaterial zwischen den Maschen des Gewebes 1 hindurchtreten kann. Das von einer nicht dargestellten Vorratsspule abgezogene Gewebe 1 wird dann in einer nicht dargestellten Kaschieranlage in einer Kunststoffmatrix 2 eingebettet. Bei den Strängen 3 handelt es sich um Fäden aus einem thermoplastischen Kunststoff, z.B. Polyethylen, welche beim Kaschieren erweichen und sich an ihrer Oberfläche mit dem Kunststoffmaterial der Matrix, welches ebenfalls weitestgehend aus Polyethylen besteht, verbinden. Das Kunststoffmaterial der Matrix 2 wird anschließend vernetzt. Für das Matrixmaterial wird deshalb ein Polyethylen verwendet, dem Silangruppen aufgepfropft sind. Die Vernetzung wird nach der Formgebung in Gegenwart von Feuchtigkeit, z.B. in einer Wasserdampfatmosphäre, bei ca. 90 ° C durchgeführt. Nach dem Vernetzen wird das Gebilde auf eine Temperatur erwärmt, die oberhalb des Kristallitschmelzpunktes der Kunststoffmaterials der Matrix 2 liegt. Bei dieser Temperatur wird der Gegenstand in Längsrichtung der Fäden 3 gedehnt (siehe Pfeil A), und zwar um 300 - 400 %. Im gedehnten Zustand wird der Gegenstand abgekühlt. Der gedehnte Zustand ist nun "eingefroren" und kann beim Wiedsrerwärmen aufgehoben werden, d.h. bei Erwärmung auf eine Temperatur bei oder oberhalb des Kristallitschmelzpunktes schrumpft der Gegenstand auf seine Abmessung zurück, die er vor der Dehnung hatte.

Der wärmerückstellbare Gegenstand weist quer zu seiner Reck- bzw. Schrumpfrichtung, d.h. in Richtung der Fäden bzw. Fasern 4, eine hohe Zugfestigkeit bei der Temperatur der Schrumpfung bei in etwa 130 ° C auf. Eine hohe Zugfestigkeit in Reck- oder Schrumpfrichtung ist nicht gegeben, jedoch wird eine Erhöhung der Reißfestigkeit dadurch erreicht, daß innerhalb der vernetzten Matrix 2 die Fäden 3 aus dem unvernetzten thermoplastischen Kunststoff vorhanden sind.

Ein eventuell entstandener Riß setzt sich nur bis zur Grenzfläche - vernetzte Matrix, unvernetzter thermoplastischer Kunststoff - fort. Es wird angenommen, daß an der Grenzfläche Oberflächenspannungen vorhanden sind, welche bremsend wirken. Außerdem nimmt die Kraft in der Rißspitze durch Verringerung der Matrixschichtdicke im Vergleich zur Dicke des Matrixmaterials zwischen den Fäden 3 ab.

### Ausführungsbeispiel:

Es werden mehrere Fäden aus Polyethylen mit einem Durchmesser von 1,3 mm extrudiert. Eine Vielzahl dieser Fäden werden als Schußfäden mit als Kettfäden einlaufenden Glasfäden mit einem Durchmesser von 0,3 mm auf einem nicht dargestellten Webstuhl zu einem Gewebe verarbeitet. Der Abstand zwischen den Polyethylenfäden betrug 1,3 mm und zwischen den Glasfäden 1,3 mm.

Dieses Gewebe wurde in einer Kaschieranlage in einer Kunststoffmasse eingebettet, die folgende Zusammensetzung hatte:
- 50: Teile LLDPE (lineares Polyethylen niederer Dichte, z.B. 0,93 g/cm³)
- 50: Teile Ethylen-Vinyl-Acetat
- 1,5: Teile Vinyltrimethoxisilan
- 0,02: Teile Peroxid
- 0,05: Teile Dibutylzinndilaurat.

Das so erhaltene Laminat hatte eine Wanddicke von 4 mm. Nach dem Einbetten des Gewebes werden nun von dem so hergestellten Band die gewünschten Längen abgetrennt und über einen Zeitraum von einigen Stunden in einer feuchtwarmen Atmosphäre gelagert. Anschließend daran werden die Gegenstände auf ca. 130 ° - 150 ° C erwärmt und in Richtung der Fäden 3 um ca. 400 % gereckt und im gereckten Zustand auf Raumtemperatur abgekühlt. Der Gegenstand ist dann wärmerückstellbar und kann noch mit einer Heißschmelzkleberschicht oder einem thermochromen Anstrich versehen werden.

## Patentansprüche

1. Verfahren zur Herstellung eines wärmerückstellbaren Gegenstandes, bei dem ein oder mehrere Stränge (3) aus Kunststoff in einer Polymermatrix (2) eingebettet werden, die Polymermatrix (2) vernetzt, auf eine Temperatur oberhalb des Kristallitschmelzpunktes der Polymermatrix (2) erwärmt, bei dieser Temperatur gedehnt und in gedehntem Zustand abgekühlt wird, dadurch gekennzeichnet, daß ein bandförmiges Gewebe/Geflecht (1) o. ä. aus in einer Richtung verlaufenden Strängen (3) aus thermoplastischem Kunststoff und quer dazu verlaufenden Strängen (4) aus im wesentlichen nicht verformbarem Werkstoff hergestellt wird, daß das Gewebe, Geflecht (1) o. ä. in der Polymermatrix (2) eingebettet wird und daß das Dehnen in Richtung der Stränge (3) aus thermoplastischen Kunststoff erfolgt.

## Claims

1. Process for producing an article which can recover its shape under heat, in which one or more strands (3) of plastic are embedded in a polymer matrix (2), the polymer matrix (2) is crosslinked, heated to a temperature above the crystalline melting point of the polymer matrix (2), stretched at this temperature and cooled in the stretched state, characterized in that a woven/braided fabric (1) or the like in strip form is produced from strands (3) of thermoplastic material running in one direction and strands (4) of substantially non-deformable material running transversely thereto, in that the woven fabric, braided fabric (1) or the like is embedded in the polymer matrix (2) and in that the stretching is performed in the direction of the strands (3) of thermoplastic material.

## Revendications

1. Procédé de fabrication d'un objet permettant de restituer de la chaleur, dans lequel un ou plusieurs brins (3) en matière plastique sont enrobés dans une matrice en polymère (2), la matrice en polymère (2) est réticulée, chauffée à une température supérieure au point de fusion des cristaux de la matrice en polymère (2), étirée à cette température et refroidie à l'état étiré, caractérisé en ce qu'un tissu/tissage (1) ou autre, sous forme de bande, est fabriqué avec des brins (3) constitués de matière synthétique thermoplastique s'étendant dans un sens et des brins (4) s'étendant de manière transversale à ceux-ci constitués d'un matériau sensiblement non déformable, en ce que le tissu, tissage (1) ou autre est enrobé dans la matrice en polymère (2) et que l'étirage s'effectue dans le sens des brins (3) constitués de matière synthétique thermoplastique.
